# EUROPEAN PATENT APPLICATION

(11) **EP 4 223 677 A1**
(43) Date of publication of application: **09.08.2023**
(21) Application number: 22154977.7
(22) Date of filing: 03.02.2022
(51) Int. Cl.: B65G 57/00, B65G 57/03, G06Q 10/08, B66C 17/06, B65G 61/00

(54) **PALLETISING/DE-PALLETISING SYSTEM**

(71) Applicant: Körber Suppy Chain DK A/S, 9510 Arden (DK)
(72) Inventor: Kristensen, Jan, 9210 Aalborg SØ (DK); Capone, Michael, 22087 Hamburg (DE)
(74) Representative: Chas. Hude A/S

(57) **Abstract**

This invention relates to the method for managing pallet interlayer material comprising the steps of receiving pallet data relating to one or more palletising/de-palletising device(s); moving an automated pallet interlayer overhead transport device (OTD) to a pallet interlayer supply zone in which at least one supply interlayer is located; gripping a target supply PIM with said OTD and transporting said pallet interlayer to or from the pallet for palletising/de-palletising. Further the invention relates to a method of using OTD for tool changes in a palletising/de-palletising device in an automated palletising system.

## Description

### FIELD OF THE INVENTION

The present invention relates to.

### BACKGROUND OF THE INVENTION

Palletising/de-palletising consists of a process comprising the placement or removal of goods (e.g.: boxes, cases, totes, containers, etc.), layer upon layer, on a pallet. Frequently, in the pallet palletising/de-palletising process, layers of goods are separated by a Pallet Interlayer Material (PIM) to increase pallet overall stability, facilitate handling and/or fulfil system or operational requirements. Further purposes of interlayer sheets include protection and separation of the product layers in a pallet during transport. Positioned at the bottom of the pallet, the pallet insert additionally prevents contamination and damage related to the use of a pallet: Damping, perforations, pallet marks and layer collapsing. When positioned between layers, the pallet interlayer separates the layers and avoids any contamination of a defective packaging. The interlayer also prevents friction and deterioration of the products. When positioned on the top of the pallet, the top sheet protects the last layer of products against dust and other contamination related to the transport or storage of double stacked pallets.

The pallet interlayer further ensures cohesion between the different units of palletised products. It also makes it possible to stiffen the load and it helps a better distribution of the weight of the palletised loads. Depending on the nature of the interlayer, it provides a flat surface that allows the stacking of irregularly shaped products or informs. Thanks to a palletising pad with a non-slip surface, for example carrier plates or shipping boxes may be removed, and products may be directly palletised in their ready-to-sell packaging.

Thus, in the case of a columnar palletisation, an interlayer ensures the stability and the cohesion of the batteries which makes it possible to increase the height of the palletised load.

In the production of these interlayers, materials such as single-type plastic sheets or different types of multilayer plastics such as Bubble Guard or twin wall sheets or a combination of carton sheets, boards and/or other pallets may be used.

Currently, the task of placement and/or removal of PIM is performed by either of two methods (or a combination of these): Manually, wherein a worker assesses or is informed of which pallet requires addition and/or removal of PIM and the type of PIM needed. In case of addition, the worker picks up the recommended material in the specific PIM buffering zone and carries and places the PIM on the pallet under assembly manually. In case of removal, the worker moves to the pallet under disassembly, picks up the PIM, carries and places the material to the specific PIM buffering zone.

In the case of automatic handling, a robotic system, e.g., a palletising/de-palletising system (PDS), such as those including industrial robots, robotic cells and/or robotic gantries, and/or automated vehicles, among others, is installed on the warehouse shop floor to perform palletising/de-palletising tasks and is additionally used to handle PIM inside the palletising/de-palletising area. The robotic system is commanded by a controlling system that defines which pallet, PIM, buffering zone and operation are to be performed.

These solutions both comprise disadvantages. Manual PIM handling presents drawbacks for being labour-intensive, time-consuming and potentially hazardous for workers due to significant loads being carried over considerable distances. Robotic PIM handling demands physical shop floor space to install required machinery and reduces PDS machine availability.

Furthermore, in both cases PDS operational availability is affected, either by performing the PIM picking and dropping tasks or by waiting for said tasks to be performed, therefore reducing system overall equipment effectiveness (OEE) and increasing operational costs. Finally, interlayers are available in various dimensions, thicknesses, and grammages and are developed according to customer-specific requirements. Thus, devices adapted to the handling of interlayer characteristics specifically are also advantageous.

EP14196379A relates to a warehouse and a corresponding method in which products or trays are stored by use of a motor-driven unmanned aerial vehicle. The storage positions are known only to a central computer.

WO 2017/216766 A1 relates to a palletising/de-palletising station for goods using drones.

WO 2016/154279 A1 relates to a drone warehousing system.

### SUMMARY OF INVENTION

Therefore, there is a need for integrating handling and management of pallet interlayer material (PIM) in the palletising/de-palletising process and to increase overall equipment effectiveness (OEE) and thereby decrease operational costs.

This is achieved by the present invention by using latent overhead air space to perform transport and placing of PIM amongst other tasks.

Accordingly, it is a first object of the invention to provide a method enabling automated supply of PIM into said existing PDS setup while being independent from a PDS setup but cooperating with and optimising it.

Thus, in a first aspect, the invention relates to the method for managing pallet interlayer material comprising the steps of receiving pallet data relating to one or more palletising/de-palletising device(s); moving an automated pallet interlayer overhead transport device (OTD) to a pallet interlayer supply zone in which at least one supply interlayer is located; gripping a target supply PIM with said OTD and transporting said pallet interlayer to or from the pallet for palletising/de-palletising.

Preferably, the OTD is equipped with at least one gripping device comprising one or more gripping means.

In one embodiment, the data relating to one or more palletising/de-palletising devices is acquired and/or sent by a palletising/de-palletising device. Thereby, the data relating to one or more palletising/de-palletising devices may advantageously be received and processed centrally in, e.g., a control system receiving said data.

In another embodiment, the data relating to one or more palletising/de-palletising devices is sent by at least one device other than a palletising/de-palletising device, such as a data processing apparatus forming part of a PDS or sensors located in the palletising/de-palletising area. Thereby, the received data relating to one or more palletising/de-palletising device may advantageously be processed centrally in, e.g., a control system receiving said data.

In one embodiment, the method for managing pallet interlayer material further comprises the step of assigning an area for palletising/de-palletising. Thus, assigning an area for palletising/de-palletising may advantageously be done autonomously, and possibly by processing data received for optimisation of palletising/de-palletising zone assignment and increasing OEE.

In another embodiment, said method comprises the step of determining overhead transport device route, whereby the travel distances can advantageously be determined as shortest/fastest/safest/most energy efficient etc.

In a further embodiment, the method comprises determining overhead transport device route, wherein receiving pallet data comprises receiving positional and/or route data relating to a palletising/de-palletising device and/or an overhead transport device, thereby generating processed data for further increasing OEE through travel time reduction and collision avoidance.

In one embodiment, OTD route determination relates to a route of transport of a PIM from a staging zone to a palletising/de-palletising zone.

In another embodiment, OTD route determination relates to a route of return of an OTD from a palletisation/de-palletisation zone to a Parking Zone (PZ), Hover Zone (HZ) or a staging or supply zone.

In another embodiment, OTD route determination relates to a route of transport of a PIM from de-palletisation zone to a supply zone or a HZ.

In another embodiment, OTD route determination relates to a route of transport of a PIM between two staging zones, or between a HZ or PZ and a staging zone or palletising zone.

In a further embodiment, said method comprises the step of determining overhead transport device route for collision avoidance and providing route instructions to an overhead transport device, wherein receiving pallet data comprises receiving positional and/or route data relating to a palletising/de-palletising device or an overhead transport device, thereby further increasing OEE through travel time reduction and collision avoidance.

In a further embodiment, determining overhead transport device route for collision avoidance comprises checking a palletising/de-palletising device positional data and determining a second route for said overhead transport device such that collision of the overhead transport device with the palletising/de-palletising device is avoided. Thus, a palletising/de-palletising device position/planned operational trajectory is prioritised over the first planned route of the OTD. Thereby, completion of the task of a palletising/de-palletising device is prioritised, since typically more bulky, less manoeuvrable and in fewer numbers than OTDs in a palletising/de-palletising area, and OEE is thereby increased.

Positional data may include position coordinates, distance inferences, latest registered speed, apparent speed, predicted speed, max speed, planned route and/trajectory, height, inclination, direction etc.

In another embodiment, the method comprises the step of identifying or designating a pallet interlayer material supply zone or staging zone comprising at least one pallet interlayer material. Thus, assigning a pallet interlayer material supply zone or staging zone may advantageously be done autonomously and possibly by processing data received for optimisation of said zone assignment thereby increasing OEE.

In another embodiment, the method includes the step of sending instructions to the overhead transport device to move to said supply zone, to grip/grab a target supply PIM and/or transporting said PIM to or from the pallet for palletising/de-palletising.

In one embodiment, the PIM supply zone is an area different from the palletising/de-palletising area, such as a staging zone.

In another embodiment the PIM supply zone is the palletising/de-palletising area, and the target supply PIM is grasped by the overhead transport device from the top of a pallet. Within the context of such an embodiment, the PIM is dropped at a third location, such as a staging zone or a temporary storage zone.

In one embodiment, the data received comprises data identifying the pallet for palletising/de-palletising. In some situations, e.g. where only few pallets need palletising/de-palletising, the data received may advantageously comprise data identifying said pallets and/or the order of desired palletisation/de-palletisation. This data could, for example, advantageously be sent in a step triggered manually by an operator who has taken a decision on which pallets should be palletised/de-palletised, and possibly further decisions, such as in which order pallets should be palletised/de-palletised.

In another embodiment, the data received comprises data identifying PIM material requirements, such as, e.g., optimal gripping means requirements. Thus, in one embodiment the method further comprises the step of the OTD moving to an area, where switching of the type of gripping means may be performed and performing said switching so that the gripping means are attached to a gripping device of the OTD.

In a further embodiment, an OTD and/or griping means are arranged to be operable such that it may be adjusted and/or modified. The data processing apparatus may instruct adjustment of equipment and/or gripping means and/or modification according to, e.g., gripping means- or OTD-acquired data, thereby increasing task success rate and OEE.

Thus, in one embodiment, determining PIM requirements includes processing OTD or gripping means-acquired data. Such processing requires OTDs and/or gripping means being arranged with sensors and may advantageously result in the determination of, e.g., equipment and/or PIM position recognition, equipment and/or PIM obstacles recognition, equipment and/or PIM collision avoidance, equipment positioning accuracy, equipment and/or swarm indoor flight, PIM type and condition recognition, PIM picking/placement accuracy.

In another embodiment, the method comprises the step of identifying a pallet for palletising/de-palletising. This step may be carried out, e.g., by a control system (CS) having received data relating to one or several PDSs and by processing the data, resulting in determining pallet interlayer material requirements.

The method can further comprise a step of taking pictures with a drone or OTD of the pallets being depalletised and determining whether there is a slip sheet on top of pallets. If it is determined that there is a slip sheet, then instructions for removing it is sent to an OTD, before the Depalletiser is moving to the position is send to an OTD.

The method can further comprise a step using an OTD or a drone to take pictures and/or video shots of the pallets and assessing whether a pallet is "looking" unstable and needs a PIM. The assessment can be done using Al algorithms, where the pictures and/or video shots are compared to pictures and/or video shots of a stable pallet or by comparing parameters extracted from said pictures and/or video shots with reference parameters.

In a further embodiment, the method is carried out in such a way that PIM is interposed between layers of goods, on top of a layer of goods or beneath a layer of goods. Thus, a CS receives PDS related data and determines at what time a palletising/def-palletising device is to drop at least one PIM on the pallet present in the palletising/de-palletising area, thereby resulting in PIM being interpolated within at least two layers of goods or on top or beneath a layer of goods being or to be stacked.

Thus, in a second aspect, the invention relates to a computer-implemented method for managing pallet interlayer material comprising the steps:
- receiving pallet data relating to a palletising/de-palletising device;
- determining pallet interlayer material requirements; and
- providing instructions to an overhead transport device.

By receiving pallet data relating to a palletising/de-palletising device, the method enables, inter alia, collection of data relating to pallet attributes, such as, but not limited to pallet identity, pallet location, pallet load and palletising/de-palletising status.

Pallet interlayer requirements may include, but are not limited to, determining quantity and/or quality of PIM required for a task, thus determining that a PIM is required, but possibly also determining what PIM is required according to PIM type, size, weight, impermeability to water and/or other fluids or solvents, wet strength, construction material, construction attributes, number of PIM units required, frequency of delivery required, distance between at least one OTD and at least one staging or supply zone, distance between at least one staging or supply zone to at least one palletising/de-palletising area, list of OTDs in an Overheads Transport System (OTS) optionally including metadata such as location, status, task list, power charge, planned itinerary, excluded routes, current speed, max speed, current payload, max payload, and sensor information, such as temperature, applied gripping means tensile pressure, maximum gripping means tensile pressure, camara data etc.

In one embodiment, pallet interlayer requirements are determined at least in part by a PDS and are communicated to the control system (CS).

In another embodiment, pallet interlayer requirements are determined by the CS such that the CS system processes the PIM requirements, assigns tasks to overhead transport devices and thereby coordinates PIM handling operations.

Pallet interlayer material requirements are determined according to dynamic criteria including, but not limited to, goods characteristics, interlayer material type, condition and/or availability, overhead transport device type, condition, speed of execution and/or availability.

Pallet data may include data relating to more than one pallet or palletising process. Thus, comparisons may be carried out and prioritisation of tasks may be established according to pallet attributes and prioritisation criteria. Further, coordination between palletising/de-palletising actions and PIM dropping may advantageously be accomplished, leading to increase of OEE.

In one embodiment, the computer-implemented method for managing pallet interlayer material comprises providing instructions to one overhead transport device. Said instructions may include, but are not limited to, instructions to travel to an assigned location/area in the work area, releasing/attaching gripping means, releasing/attaching tools, docking to a charging station, gripping PIM, dropping PIM, recording sensor-acquired data, transferring raw or processed data to a CS or other device within the OTS etc.

In a further embodiment, said instructions include a route through three-dimensional space instructions such as to include and/or exclude specific flight routes and/or speed or flight height limitations, among others.

In another embodiment, said method comprises providing instructions to more than one OTD. Thus, the method is adapted to instructing the OTS or OTDs individually to operate successively, collaboratively and/or as a swarm, with two or more OTDs possibly handling the same PIM. Such an arrangement may advantageously enable the OTS to handle a sheet of interlayer material that a single OTD alone could otherwise not have carried. Further advantages include increased adaptability of OTDs to PIM of varying characteristics since a swarm can carry payloads exceeding the compatibility range of a single OTD. Thereby, adaptability of costs is achieved since OTDs of a same type may be combined to adapt to the PIM requirements for each task and there is no need for the purchase of OTDs of different types and/or with different PIM-compatibility features. These purposefully designed OTDs might spend considerable time not being operated due to limited adaptability to PIM requirements, thus diminishing OEE. This situation is advantageously avoided by use of two or more OTDs handling the same PIM. When operating in collaboration or as swarm, OTSs may be operable to jointly coordinate movement, positioning, collision avoidance, PIM identification, PIM verification and/or PIM picking, among others.

In one embodiment, the computer-implemented method for managing pallet interlayer material further comprises the step of assigning an area for palletising/de-palletising. Assigning an area for palletising/de-palletising may be the result of determining available PDSs and pallet interlayer material requirements according to the above-mentioned goods characteristics, interlayer material type, condition and/or availability, overhead transport device type, condition, speed of execution and/or availability, amongst others. Thus, such a feature enables the method to further decrease operation times and to further increase OEE.

In a further embodiment a plurality of palletising/de-palletising areas with a plurality of palletising/de-palletising zones and staging zones are considered; thus, the computer-implemented method for managing pallet interlayer material comprises the step of assigning a zone for palletising/de-palletising and/or a staging zone by first processing data relating to several PDSs and/or staging zones and determining/selecting an appropriate and/or optimised PDS and staging zone.

In a further embodiment, said method further comprises the step of determining that a staging zone should be assigned as a temporary storage zone.

In a further embodiment, the computer-implemented method for managing pallet interlayer material further comprises the steps:
- receiving positional and/or route data relating to a palletising/de-palletising device or an overhead transport device;
- determining overhead transport device route for collision avoidance; and
- providing route instructions to an overhead transport device.

Thereby, a method for transporting PIM by picking, dropping and/or moving PIM while avoiding collisions with PDS or other devices is advantageously achieved.

Thereby, the method for handling of pallet interlayer material intelligently and automatically handles PIM within the palletising/de-palletising process without use of PDS and/or manual labour.

The hover zone HZ is a zone established in the latent aerial space above and within the palletising/de-palletising area. The HZ may be understood as any unoccupied aerial space comprised above the line of the machines and/or structures inside the palletising/de-palletising area. A HZ is not to be considered as a fixed location, instead, as a virtual region in the palletising/de-palletising area in which the OTD is waiting. The advantages of a HZ are that the OTD hovers and waits close to the usage area and hence time is saved and OEE is increased.

In some embodiments, a plurality of HZs may be assigned, modified and/or removed by a CS dynamically, and a plurality of OTDs can be held in or given instruction to move to a single and/or a plurality of HZs simultaneously. Assignment and usage of HZ(s) may be carried out by the method of the invention further comprising the steps of determining best PIM picking and placement, sequencing/resequencing of tasks, selection of OTDs and assigned routes, reduction of PIM handling time, amongst others.

In some embodiments, a plurality of OTDs and/or gripping means can be selected, activated and/or managed by the CS to pick and place PIM in a plurality of PIM placement locations simultaneously and/or subsequently. This enables a plurality of PIM picking operations to be performed by a plurality of OTSs concurrently, either deploying a single or a plurality of OTDs operating individually or collaboratively to handle PIM.

In a third aspect, the invention relates to a data processing apparatus comprising means for carrying out the steps:
- receiving pallet data relating to a palletising/de-palletising device; and
- providing instructions to an overhead transport device.

By carrying out said steps, the data processing apparatus advantageously controls an overhead transport device. Said controlling by, e.g., a control system, results in a coordinated interaction between PDS(s) and overhead transport device(s) which in turn increases OEE.

In another embodiment, the data processing apparatus further comprises means for determining additional parameters, such as pallet interlayer material requirements as described herein above, assigning an area for palletising/de-palletising, and/or receiving positional and/or route data relating to a palletising/de-palletising device or an overhead transport device route for collision avoidance. In particular, the data processing apparatus comprises means for determining data as described within the context of the other aspects of the invention. Thereby, additional data may be managed, stored and/or processed centrally, and OEE is advantageously further increased.

It is a further object of the invention to provide a PIM transport system that is mechanically independent from an existing PDS setup and that allows an automated supply of PIM into said existing PDS setup while cooperating and optimising it.

Thus, in a further aspect, the invention relates to a system comprising:
- an overhead transport system comprising at least one overhead transport device comprising gripping means; and
- a data processing apparatus or control system communicatively connected to said overhead transport device.

By the overhead transport device comprising gripping means, the device may advantageously be specifically adapted to pick up interlayer material of specific types/characteristics and transport it to its intended location with decreased chances of the PIM being dropped in a non-intended location or damaged, thus increasing OEE.

In one embodiment, the OTD is equipped with a plurality of gripping means types, sizes, shapes and operability; equipment with different gripping means may be employed simultaneously or individually.

In another embodiment, the OTD is arranged to switch gripping means or tools either manually e.g., with a suction, push-fit, snap-fit or screw mechanism or autonomously, e.g., with mechanism adapted to combine with a gripping means switching station, thereby advantageously allowing gripping means and tools to be interchangeable and expanding the range of adaptability of the OTD.

By the data processing apparatus or control system being communicatively connected to at least one overhead transport device, said apparatus or control system may advantageously send instructions to said overhead transport device efficiently.

In one embodiment, the overhead transport system comprises one overhead transport device. In another embodiment, the overhead transport system comprises a plurality of overhead transport devices. Thereby, the overhead transport system is advantageously able to pick PIM from at least one staging or supply zone and to drop PIM at at least one palletising/de-palletising zone.

By the system comprising a data processing apparatus or a control system communicatively connected to said OTS, the system is advantageously capable of assessing best efficiency for a task autonomously and subsequently executing said task. Further, by providing a PIM transport system, which allows an automated supply of PIM, the invention provides a PIM transport system which is physically and/or mechanically independent from the PDS setup while operating collaboratively with it. This fulfils at least some of the objects of the present invention, namely, increasing OEE and reducing operational costs. Also, by providing a PIM transport system which is physically and/or mechanically independent from an existing PDS setup, the invention provides integration of a PIM system with said existing (gantry-like) PDS system without the need for installation of additional support structures on the shop floor (requiring precious shop floor space). Further, the integration of said system into an existing PDS setup allows the implementation of the method described herein above into an existing PDS setup while cooperating with it and optimising it.

In another embodiment, the system comprises UCSs embedded or combined with other Control Systems (CS) such as, but not limited to: Warehouse Control System (WCS), Programmable Logic Controller systems (PLC), Warehouse Execution System or Warehouse Management System (WMS).

In a further embodiment, the system comprises CS operable with wireless protocols such as Zigbee, Sigfox, Bluetooth, BLE, Z-Wave, 4G, 5G, or WiFi.

In a further embodiment, the overhead transport system comprises at least one type or a combination of types of overhead transport devices selected from the group comprising but not being limited to drones, unmanned aerial vehicles (UAVs), multi-copters, multi-cable winch systems and mini cranes. Each of these types bears its own advantages, for example, drones and UAVs are very manoeuvrable, precise, and may be easily combined and coordinated to form clusters displaying swarm behaviour which may provide an easily scalable platform to adapt to different workloads. Multi-copters can lift more weight, thus being indicated for picking and transporting more than one PIM at a time or heavier PIMs. Further, drones and multi-copters can fly "around" the gantry crane-like gripping means of a PDS, thereby avoid crashes as they are not bound to fixed trajectories. Multi-cable winch systems are cheap to install and to operate, since these are based on simple mechanics with few, elementary components. Mini-cranes are robust and can bear the heaviest loads.

In a further embodiment, the overhead transport system comprises more than one type of overhead transport device. Thereby, an adjustable system is achieved, which may adapt to different setups, e.g., comprising more than one PDS each having different characteristics. Alternatively, different types of OTDs may be used or the same type of OTD with different characteristics, such as two drones with diverging speed and/or autonomy characteristics: By using two different types of drones PIM transport time may further be reduced and OEE increased. For example, one drone type may have a relatively slow execution and/or travel speed but may have a comparatively high energy efficiency and rarely requires recharging. This type of drone or other UAV can thus, fly for a comparatively long time. A second type of drone type may display faster execution and/or travel speeds, but may need frequent recharging. In such an embodiment, the second drone provides a continuous PIM feed to a temporary zone, such as a spare staging zone, speed not being of interest for this continuous supply; said first drone is used for quick supply of PIM to the pallet where and when it is needed. Thereby, PIM delivery speed is increased, and PIM delivery rate is more easily guaranteed, thus advantageously increasing OEE. In such a setup, the temporary zone may be advantageously closely located to the palletising/de-palletising zone.

In one embodiment, the data processing apparatus is a stand-alone device, such as a computer communicatively connected to the overhead transport system and adapted for carrying out CS functions.

In another embodiment, the data processing apparatus according to the invention is comprised within the overhead transport system.

In yet a further embodiment, the data processing apparatus is comprised within the overhead transport device. Thereby, each OTD may comprise a data processing apparatus and may, thus, communicate with other OTDs in the OTS, and thereby advantageously adapt to changing parameters more efficiently, i.e., without need for processing of all data relating to the OTS by a central data processing apparatus which is limited by its own data processing capacity. The overhead transport systems may, thus, be advantageously capable of autonomously performing tasks such as flying, hovering, picking PIM, placing PIM, docking to power charging, displacing, locating, positioning, assessing optimal trajectory, avoiding collision, coordinating group flight, among other functionalities. This arrangement also provides increased safety for the system of the invention, since a malfunction of one data processing apparatus would only affect the functionality of the one OTD, and not that of the entire OTS.

In a further embodiment, the system comprises collision detection means. Such means may include sensors such as movement sensors, optical lenses capable of detecting light in the visible, IR or UV ranges, acoustic or electromagnetic sensors amongst others. Such sensors may include any device capable of detecting a change in environmental parameters, such as light or sound, but also parameters generated or inferred by movement of other devices or components of the system or, e.g., the OTD itself. Thus, Passive Infrared (PIR), ultrasonic, microwave, tomographic and combined types of sensors, amongst others, are contemplated. Also, potentiometric position sensors (resistance-based); inductive position sensors; eddy current-based position sensors; capacitive position sensors; magnetostrictive position sensors; hall effect-based magnetic position sensors; fibre-optic position sensors; optical position sensors and ultrasonic position sensors amongst others are also contemplated. By the system comprising such means, the system is provided with a real-time data source which may serve to optimise by coordination and/or prioritisation of an OTD based on location and/or trajectory information thereby advantageously increasing OEE.

In a further embodiment, an OTD comprises sensors that enable the performance of additional tasks, such as, but not limited to, quality and safety inspections, inventory control, PIM quality inspection, and procedure tests. An OTD may further comprise technologies and/or a mix of technologies such as: cameras, lasers, ultra-sound, LIDAR, WiFi, LiFi, Bluetooth, near-field communication (NFC), radio, magnetic positioning, dead reckoning, behavioural analytics, and image recognition, amongst others.

In another embodiment, the OTD is equipped with at least one tool enabling the OTD to perform maintenance and service functions.

In a further embodiment, the gripping means suitable for working in combination with an OTD is equipped with at least one sensor. Such a sensor may be an optical sensor, or a mechanical pressure-sensing element, such as bellow type, bourdon & helical type or diaphragm types. A gripping means may further comprise technologies and/or a mix of technologies such as: cameras, lasers, ultra-sound, Lidar, WiFi, LiFi, Bluetooth, near-field communication (NFC), radio, magnetic positioning, dead reckoning, behavioural analytics, and image recognition, amongst others. The inclusion of such sensors may advantageously enable the OTD or gripping means to collect data relating to placement accuracy, gripping strength, OTD location (by use of static or mobile reference points in the three-dimensional space surrounding the OTD) etc.

In one embodiment, indoor navigation and position technologies and/or sensors may be embedded in an OTD, PDS and/or CS.

In a further embodiment, OTDs and/or griping device(s) may be arranged to be either manually or automatically adjusted, converted and/or modified, e.g., gripping prongs may be adjusted in several ways to suit PIM requirements, e.g., by altering the angle between prongs and/or padding construction material for increased gripping capability. Such a feature advantageously further increases adaptability of the gripping means and of the OTD thereby increasing OEE.

In a further embodiment, the system comprises a palletising/de-palletising device. By comprising at least one PDS, the system parts may be more readily adapted to communicate efficiently thus increasing OEE.

In one embodiment, the invention comprises a plurality of PDSs operating individually or combined. In a further embodiment, the plurality of PDSs of the invention present a plurality of configurations individually, advantageously allowing for palletising/de-palletising of goods of different nature simultaneously. Such an embodiment requires that determining pallet interlayer material requirements comprises processing the data relating to the plurality of PDSs and thereby determining pallet interlayer material requirements according to the invention.

In a further embodiment, the overhead transport device, the data processing apparatus and/or the PDS is configured to be communicatively connected by wireless means. Thereby, ease of installation is increased, such as the ease of adding or removing devices, e.g., overhead transport devices and/or PDSs to the systems are increased and shop floor space and overhead space is uncluttered, thereby again reducing the risk of accidents and increasing OEE. Further, OEE is increased because of the lack of obstruction in the overhead space.

In a further aspect, the invention relates to a method of changing a tool of a palletising/de-palletising device such as a robot, a gantry, a bridge crane or the like, said method comprises the steps of
- determining that a tool change is needed
- determining what replacement tool is needed
- moving an overhead transport device to the palletising/de-palletising device
- releasing the tool to the overhead transport device
- transporting the replacement tool to the palletising/de-palletising device with an overhead transport device
- transferring the replacement tool to the palletising/de-palletising device.

The advantage of using overhead transport devices in an automated tool change operation is that the down time is decreased and further the latent space is utilised so that there is no interference with other possible devices etc. Thereby, the OEE is increased. Another advantage is that multiple PDSs across a large area can share multiple tools and thereby reduce the number of needed tools and transport system for tools. It also allows storing the tools any place in the building thus optimising storage space.

In a preferred embodiment, the tool change involves at least two overhead transport devices so that a first overhead transport device can carry the replacement tool and a second overhead transport device can carry the tool being replaced. This can further decrease the down time of the palletising/de-palletising device and thereby increase the OEE.

In a preferred embodiment, the method of changing a tool of a palletising/de-palletising device further comprises the step of
- a route of travel for the overhead transportation devise.

The route can be determined as an optimal path based on parameters such as collision avoidance, utilisation of the latent space, fastest route, location of hover zones, routes of at least one other overhead transport device.

The advantage of determining a route of travel is that an overall optimum of the OEE for several palletising/de-palletising devices can be found instead of optimising only for the individual palletising/de-palletising device.

In an even more preferred embodiment, the method of changing a tool of a palletising/de-palletising device further comprises the step of
- transporting the released tool to a tool storage and/or maintenance shop
- transporting the replacement tool from a tool storage or a staging zone.

It is to be understood that the term "replacement tool" comprises both replacing for service but also switching for another tool for picking alternative products. Example Tool A can pick apples and Tool B can pick bananas, the OTS supplies the tool for the current task.

In another aspect, the invention relates to a computer program comprising instructions which cause the computer to carry out the method of the invention disclosed herein above, when the program is executed by a computer.

In a final aspect, the invention relates to a computer-readable medium having stored thereon the computer program disclosed herein above. By said program being stored on a computer-readable medium, OEE may be further optimised by storing optimised code, result of "machine learning", and may thereby make said code be more readily accessible. Further, data relating to PIM management optimisation may also be advantageously stored on the same medium, thereby providing a plug-and-play device for management of several PDS setups.

### BRIEF DESCRIPTION OF THE DRAWINGS

In the following, example embodiments are described according to the invention:
Fig. 1 shows a perspective view of an embodiment of the integrated system of dynamic pallet interlayer material handling.
Figs. 2A - 2D show various steps of a palletising/de-palletising process using the integrated system of dynamic pallet interlayer material handling.
Figs. 3A - 3C show a side view of a sequencing/re-sequencing process in an embodiment of the integrated system of dynamic pallet interlayer material handling.
Fig. 4 shows an OTD carrying out quality and safety inspections.
Fig. 5 illustrates height measurement by aid of an OTD.
Figs. 6-10 illustrates an OTD 601 performing a tool change for a palletiser/de-palletiser.
Fig. 11 illustrates a configuration of an OTD with improved airflow for carrying heavier load.
Fig. 12 illustrates an alternative configuration of an OTD for improve airflow.
Fig. 13 illustrates a swarm of drones carrying out a lift.
Fig. 14 illustrates a priority algorithm prioritising operation of palletiser/de-palletiser.
Fig. 15 illustrates a priority algorithm prioritising task between different OTD.

### DETAILED DESCRIPTION

In the following, the invention is described in detail through embodiments thereof that should not be thought of as limiting to the scope of the invention.

### Definitions

Pallet Interlay Material (PIM), "pallet interlay" or "interlay": Material placed between layers of goods on a pallet to, e.g., stabilise the load.

Palletising/de-palletising System (PDS): An expensive bridge crane, robot or gantry designed to automate the picking and placement of goods on pallets. May comprise one or more palletising/de-palletising devices and/or control systems.

Overhead Transport Device (OTD): Less expensive drones, cable winches or mini-cranes that use dead air space above the palletising zone to relieve the expensive PDS of lighter tasks.

Control System (CS): Hardware and/or software that integrates with the PDS to coordinate tasks performed by overhead transport devices.

Park Zone (PZ): An area within the palletising zone where OTDs charge, change gripping means, are serviced or otherwise idle until assigned a task.

Hover Zone (HZ), "overhead space", "overhead air space", "dead overhead space" or "dead space": The HZ may be understood as any unoccupied aerial space comprised above the line of the machines and/or structures inside the palletising/de-palletising area.

The term "palletising area" as used herein, designates an area of a warehouse, wherein pallets are layered on top of each other by a PDS or other means. A palletising area typically comprises one or more palletising zones.

A "palletising zone", as used herein, is meant as the specific location of a palletising area, where pallets are stacked or are to be stacked. Thus, a palletising zone may be either a physical or a virtual location, both of which are not to be considered as fixed locations, instead, as regions that may be designated freely at different locations within the palletising/de-palletising area to increase OEE.

The terms "pick", grasp" or "grip" as used herein relate to the action of contacting an item, typically a PIM, and lifting it by means of gripping means so to clear it from other items in its surroundings and it becomes possible to transport said item more easily.

The terms "drop" or "placing" as used herein mean the action carried out by an overhead transport device placing a pallet interlayer (PIM) on a pallet top layer. Also, when a PIM is grasped from a pallet top layer and the supply zone is the de-palletising zone, these terms refer to the release of said PIM by the overhead transport device at a third location, such as a temporary storage zone.

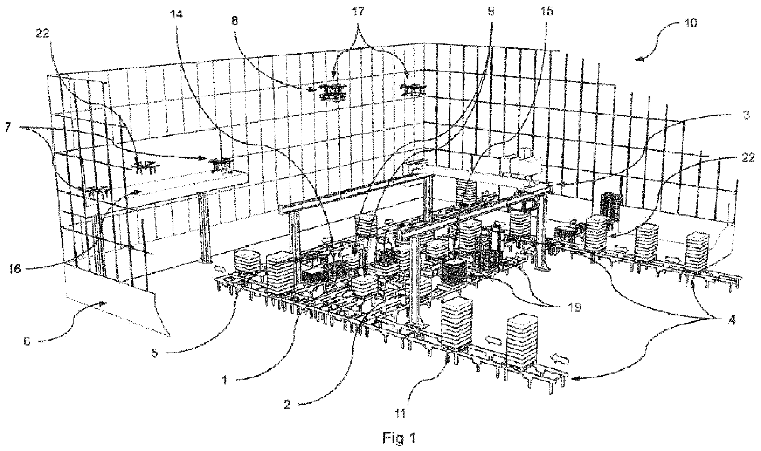

Figure 1 generally designates an embodiment of an integrated system of dynamic pallet interlayer material handling including:
1. At least one order palletising/de-palletising area (10) containing multiple zones (9), at least one of which serves as palletising/de-palletising zone (1) and at least another of which serves as staging zone (2);
2. At least one overhead transport device (OTD), exemplarily shown as drones (17) operable to pick PIM from at least one staging zone (2) and place it at at least one palletising/de-palletising zone (1);
3. At least one Control System (CS) that orchestrates tasks performed by the overhead transport devices.

The OTDs are controlled by the Control System (CS), and the CS is communicatively connected to the PDS and other warehouse systems.

Further, Fig. 1 also depicts a palletising/de-palletising system (PDS) (3) arranged at the order palletising/de-palletising area (10), the PDS being operable to pick goods by exemplarily using a gantry crane from at least one staging zone (2) and to transfer the goods to at least one palletising/de-palletising zone (1).

Further, the example of Fig. 1 depicts a pallets/goods transportation system (4) (not part of the invention) such as: conveyor systems, rail guided vehicles (RGV) or automated guided vehicles (AGV), among others; responsible for carrying pallets and/or goods in, out and within the palletising/de-palletising area. For the avoidance of doubt, an empty pallet is also considered a PIM.

The terms "staging zone", "PIM supply zone" or "supply zone" are to be understood as a zone in PIM or empty pallets being arranged to be picked and/or used during the palletising/de-palletising process.

The term "palletising/de-palletising zone" is to be understood as a zone in which goods are placed on or removed from a pallet under assembly or disassembly during the palletising/de-palletising process.

The invention may include a plurality of palletising/de-palletising areas with a plurality of palletising/de-palletising zones (1) and staging zones (2).

The palletising/de-palletising zones and staging zones are not to be seen as fixed locations, instead, a Control System (CS) assigns a zone as palletising/de-palletising zone (9) when performing a pallet assembly/disassembly process.

Fig. 1 shows fenced palletising/de-palletising area(s) (10); the fence (6) may be physical with devices such as: nets, meshes or wires, among others, or virtual with devices such as: lasers, infrared or light curtains, a video camera supervising an area, among others, or a mix of fence types, and/or geo-fencing.

The at least one type of PIM is assigned to at least one PIM location in at least one staging zone (15) by the CS. In some embodiments, a plurality of PIM types and locations (19) may be available in the palletising/de-palletising area (10). The CS may be operable to assign, unassign, alter and/or manage PIM location(s).

OTSs (7) may be held in a Parking Zone (PZ) (16). The PZ (16) is a location adapted to host OTS(s) and may assume a plurality of configurations, such as: Parking station, charging station, buffering area, gripping means switch area, amongst others.

In some embodiments, one PZ may accommodate a plurality of OTDs (7), and a plurality of PZ(s) can be assigned in the palletising/de-palletising area (10).

In some embodiments of the disclosure, an integrated method of dynamic pallet interlayer material handling is provided. In the drawings, reference numeral 10 generally designates an embodiment of an integrated system for dynamic pallet interlayer material handling. Shown in Fig. 1 are transported goods (11) to be palletised/de-palletised into the palletising/de-palletising area (10) using the pallets/goods transportation system (4); the palletising/de-palletising area comprising a plurality of zones (9), at least one of which serves as palletising/de-palletising zone (1) and at least another one of which serves as staging zone (2).

The pallet/goods transportation system (4) is instructed by the CS to arrange the goods (11) to be palletised/de-palletised in at least one palletising/de-palletising zone (1) or staging zone (2).

The PDS and other systems determine the PMI requirements from PDS related data and communicate them to the CS system.

The CS system processes the PMI requirements, assigns tasks to overhead transport systems and coordinates PIM handling operations based on a combination of criteria including (but not limited to) pay load, material type, equipment condition and availability, and speed.

At least one OTD (5.1) is selected and activated to pick PIM from at least one palletising/de-palletising (target) zone (13.1) and drop PIM to at least one staging zone (13.2) or pick PIM from at least one staging zone (13.2) and place to at least one palletising/de-palletising zone (13.1).

Selection of the at least one OTD (5.1) to perform PIM handling is instructed by the CS, which determines said selection by using one or more parameters, such as, for instance OTD location, configuration, charging status, distance to PIM pick location and PIM placement location, possible OTD routes and pallet assembly/disassembly order, amongst others.

When an OTD, e.g., held in a PZ, is selected and activated to perform a PIM handling task, it moves to perform the assigned task.

In cases where an OTD is selected to perform a second PIM handling task before concluding a task already in progress, the CS may be operable to overrule existing OTD commands, such as: Selection, routing, location and/or gripping means, amongst others, instructing PIM pick and placement via sequencing/re-sequencing of tasks.

The at least one selected OTD (5.1) might be activated via wireless protocol to perform the PIM handling task. Once activated, the at least one OTS (5.1) confirms its activation to the CS, and thereupon or concomitantly moves to at least one PIM picking location (13.2).

When positioned over the PIM picking location (13.2), the at least one OTD (5.1) performs alignment, identification and verification of at least one PIM, verifying, e.g.: PIM type, PIM damage status, PIM integrity and/or PIM overall conditions. For the purpose of PIM identification, PIM verification and alignment of the at least one OTD (5.1) with the PIM, and verification, the OTD may employ at least one gripping means and/or PDS sensors and/or indoor navigation and positioning technologies communicatively connected to the said OTD or CS.

In case the at least one overhead transport system (OTS) is deemed unsuitable for the palletising/de-palletising process, the at least one OTS may be instructed to remove the unsuitable PIM to a secondary staging zone and proceed to verification of a next PIM.

After verification and acceptance of the at least one PIM, the at least one OTD (5.1) picks the at least one PIM and transports it to at least one PIM placement location (13.1). OTD and/or gripping means may be arranged to monitor PIM grip status continuously and perform dynamic gripping adjustments. Position of the at least one OTD (5.1) and/or its gripping means is monitored by either on- or offboard positioning technologies, indoor navigation, and/or sensors, and communicated to the CS which instructs and optimises the route of the at least one OTS (5.1) dynamically, position and/or movements from the PIM picking location (13.2) to the PIM placement location (13.1).

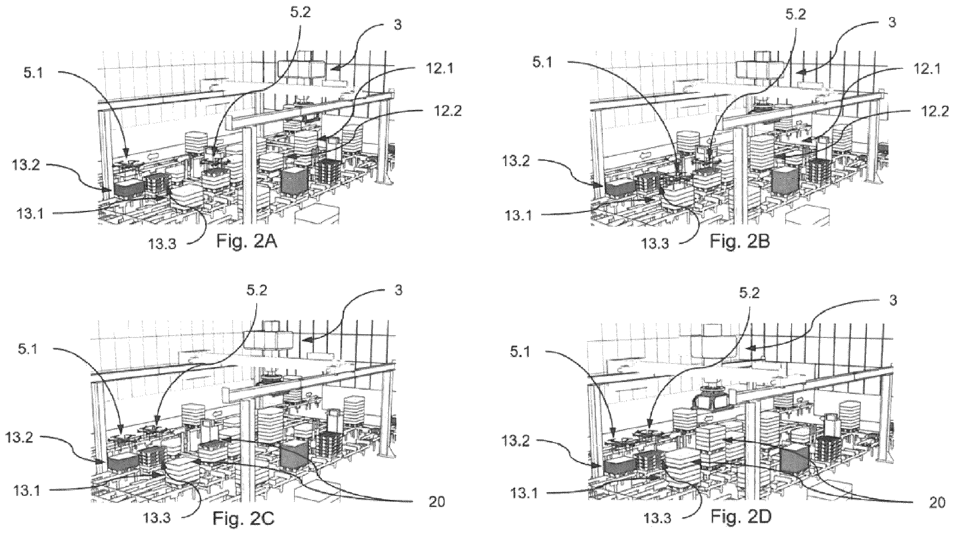

Figs. 2A - 2B depict how the at least one PDS (3) arranged in the palletising/de-palletising area (10) performs picking of at least one unit/row/layer of goods from at least one palletising/de-palletising zone (12.1) and placement on at least one staging zone (12.2) or picking of at least one unit/row/layer of goods from at least one staging zone (12.2) and placement on at least one palletising/de-palletising zone (12.1). PDS(s) is being instructed by the CS to perform pick and place operations.

After the selected OTD (5.1) has placed PIM on location (13.1), the CS instructs the OTD (5.1) to dispatch to a next PIM placement on a new or the same palletising/de-palletising zone (21.1). However, OTD (17.2) is better positioned to place the next PIM, since it already has PIM gripped and presents a shorter route to location (17.2). Therefore, CS may opt to re-sequence OTD (17.2) to location (21.1) instead of selecting and instructing OTD (5.1) to move to a PIM picking location and to the PIM placement location (21.1) afterwards.

The same may happen regarding OTD (17.1) in relation to palletising/de-palletising zone (21.2): Once OTD (17.1) is in better position to perform the PIM placement task faster, CS may determine that OTD (17.1) is best for fulfilling the task instead of OTD (5.1) or OTD (17.2).

Hence, sequencing and re-sequencing of PIM pick & placement tasks reduce OTD displacements, thus improving the efficiency of the OTS and PDS (3) and the palletising/de-palletising process. Further, OTDs may be instructed to modify, substitute, include and/or exclude route, speed, flight height limitations, among others from the PIM pick & placement process.

The at least one PDS performs consecutive goods pick and placement operations to fulfil at least one pallet assembly/ disassembly.

PDS palletising/de-palletising operations may be interpolated with PIM pick & placement tasks.

PIM removal from the top of a staging pallet may be performed by the OTS before PDS(s) starts palletising/de-palletising operations.

In Figs. 2A - 2D, the PIM pick & drop task is performed by at least one overhead transport system (OTS) (5.1) arranged in palletising/de-palletising area (10) and controlled by a CS. The at least one OTS (5.1) is configured with a gripping means operable to pick PIM. Identification of need to include or remove PIM from a pallet assembly/disassembly is performed by the CS, and need for PIM addition or removal from a pallet and type of PIM required is identified by cameras, programmable logic, sensors or human input, amongst others.

Some of the staging zones function as temporary storage zones (Figs. 2A -16). Multiple zones may be assigned as palletising/de-palletising zones and staging zones simultaneously.

When performing PIM placement, the activated OTS (5.1) is positioned over the PIM placement location (13.1). The OTS (5.1) verifies the PIM placement location (13.1) and places the at least one PIM in the assigned location.

Alignment between OTSs (5.1), gripping means and PIM placement location (13.1) employs one or more of OTD, gripping means, PDS and/or gripping means sensors and indoor navigation technologies, among others, to verify: Type of PIM on specific placement location, completion of PIM placement status, PIM delivery sequence, among others. PIM placement completion confirmation is communicated to CS by OTD (5.1) and/or gripping means with use of wireless protocols.

After release of the at least one PIM, the activated OTS (5.1 and 5.2) displaces to a secondary location (13.2 and 13.3) away from the PIM placement locations (20), allowing the at least one PDS (3) to proceed with placing more goods on the pallets under assembly/disassembly in palletising/de-palletising zones (20). OTS displacement to secondary position may be commanded by CS and takes into consideration: palletising/de-palletising orders, WMS orders and/or WCS orders, battery level, next PIM pick & placement task(s), among others. An invention(s) secondary position may be assigned to an HZ, PZ, staging zone or palletising/de-palletising zone.

Once a PIM pick and placement task has been concluded, the OTS is instructed by the CS to start a new PIM handling task, move to a PZ (16) or to a HZ, to wait for further instructions. If no additional PIM pick & placement tasks is required, OTDs are instructed to a PZ (16). CS determination of a following action for the OTS may use received data relating to: PIM pick & placement orders and locations, palletising/de-palletising orders, WCS orders, WMS orders, OTD power supply status, OTD and/or gripping means type and maintenance status, among others. Communication between OTDs, gripping means, PDSs and CSs employs wireless protocol.

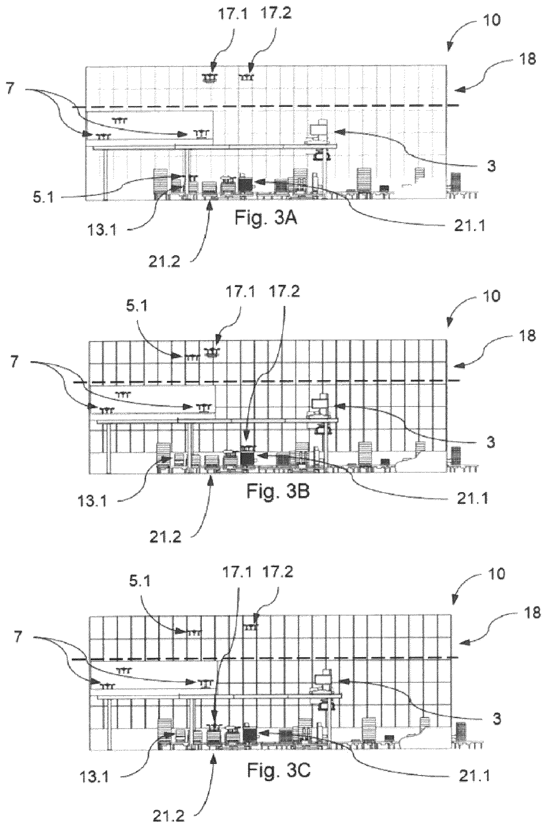

Turning now to Figs. 3A-3C, the system is arranged to assign a sequence or to re-assign a sequence or a new sequence of PIM placement order, thereby dynamically optimising PIM pick & placement tasks to enhance palletising/de-palletising operations.

Fig. 3A shows the palletising/de-palletising area (10) with OTD (5.1) placing PIM in a palletising/de-palletising zone (13.1) and two other OTDs (17.1 and 17.2) with gripped PIMs hovering over the PDS (3) in the Hover Zone (HZ) (18).

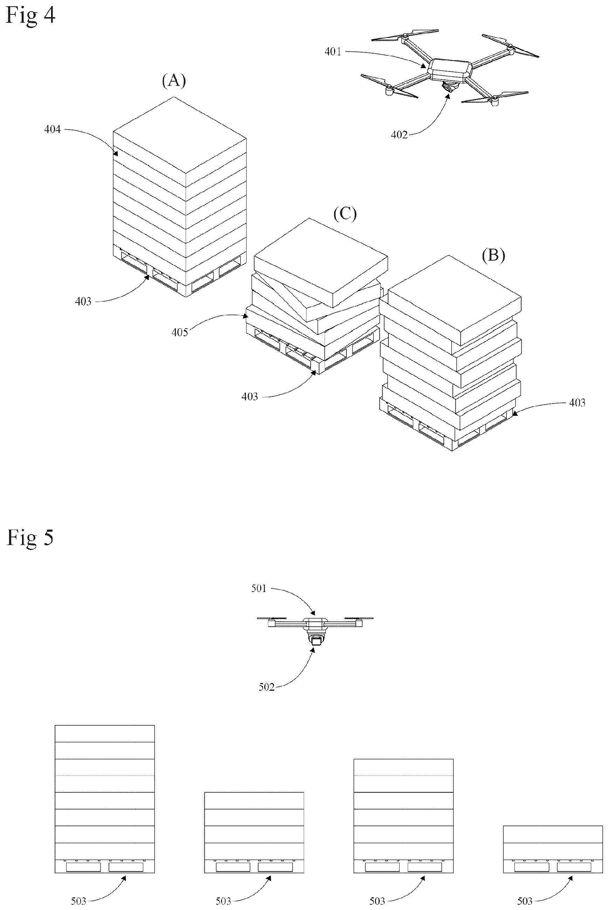

Figure 4 is an illustration of an OTD 401 carrying out quality and safety inspections. It is a challenge in production if layers are not stacked straight. Figure 4A is an illustration of a proper stacking. In the figure, the OTD 401 is equipped with a camera 402 and by taking pictures, a data processing device can determine, whether that pallet 403 is stacked with a straight layer 404 as in figure 4A, or whether it is not stacked straight as in figure 4B. This can be done by conferring with a database on the surface area which the stack is supposed to have when stacked straight and comparing it with the area detected by the camera. The inspection can be carried out both on a fixed position or while the pallet is being transported on a conveyor. Further, the OTD 401 equipped with the camera 402 can identify, whether the layers are displaced on the pallet 403 as illustrated in figure 4C. This can be done by relating the shape of the pallet 403 to the shape of the stacked layers view from above 405 and how they are positioned relative to each other.

Figure 5 is an illustration of an OTD 501 equipped with a camera 502 carrying out measurement of heights of four differently stacked pallets 503. Measurements of correct height is important to ensure that the palletiser/de-palletiser is not colliding with too high pallets and/or to guide another OTD (not shown) to apply the next PIM to the pallet correctly. The measurement of the height can be carried out both while the pallet is on a fixed position or while the pallet is being transported on a conveyor. The measurements can be used to secure that the palletiser/de-palletiser does not collide with the pallet when initiating de-palletising/palletising. It can also optimise the capacity for the palletiser when approaching the pallet as the height is "TRUE" and there is no need for searching for the height

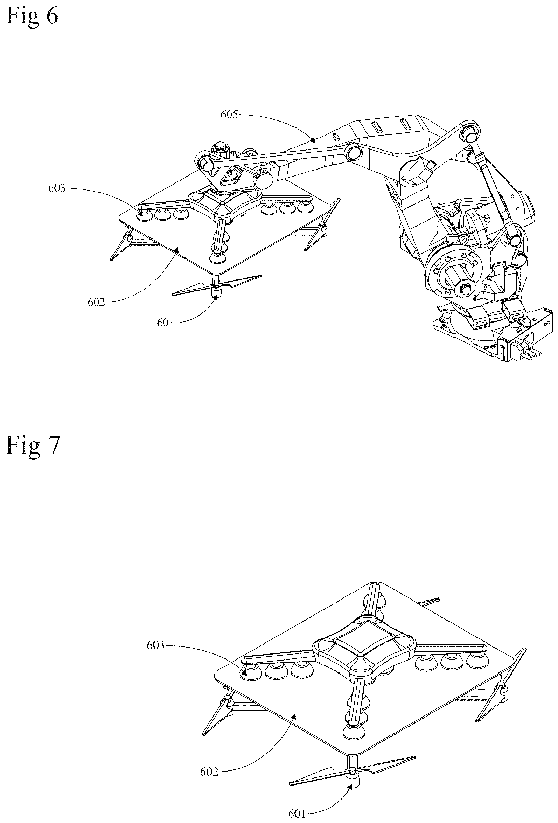

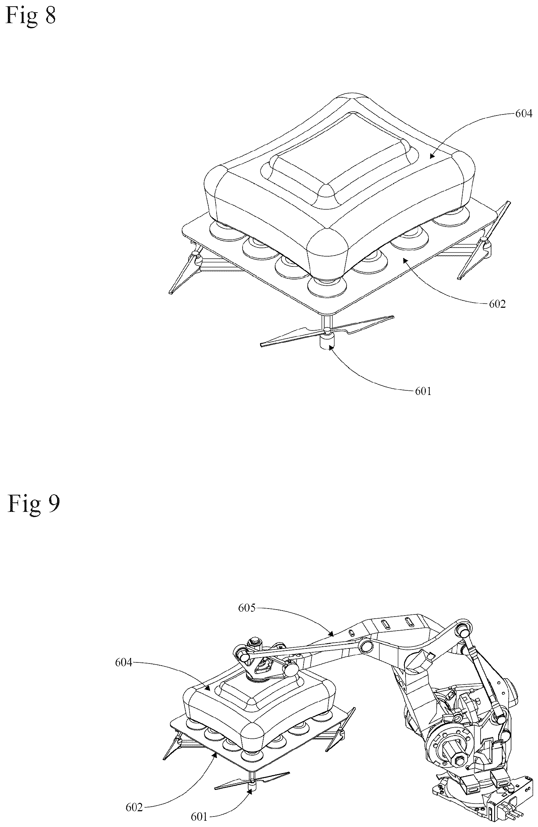

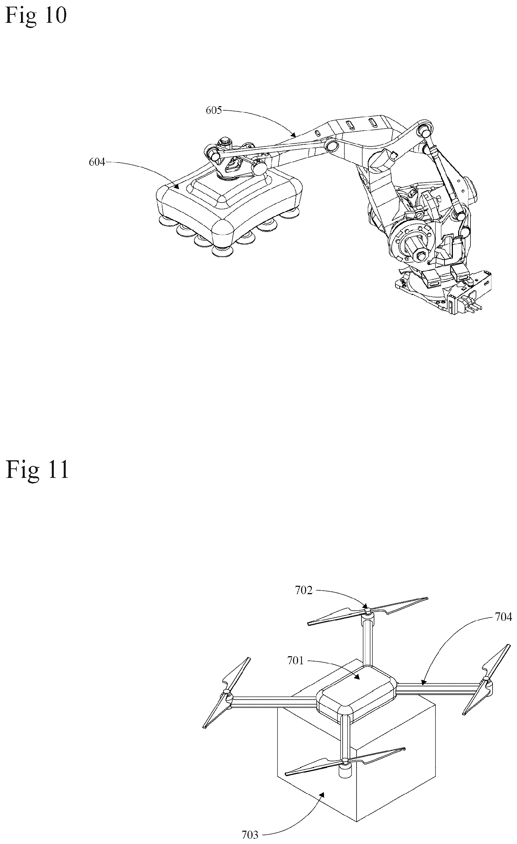

Figures 6-10 shows an OTD 601 performing a tool change for a palletiser/de-palletiser 605. In figure 6, first the OTD 601 transports a tool carrier 602 to the palletiser/de-palletiser 605. In the illustrated example, the OTD 601 is in form of a UAV/drone. Then the UAV/drone hovers below the palletiser/de-palletiser 605, while the tool is released 603. The UAV/drone then carries the tool to a storing facility as in figure 7, while second UAV/drone figure 8 with a tool carrier 602 arrives with a second tool 604 for the palletiser/de-palletiser 605. In figure 9, it is illustrated, how UAV/drone again hovers below the palletiser/de-palletiser 605, while the tool is connected automatically. The second UAV/drone then leaves the palletiser/de-palletiser and as illustrated in figure 10, the palletiser/de-palletiser now has a new tool attached. Optionally, there is only one UAV/drone involved in the operation. This could be done by a UAV/drone capable of carrying multiple tools or by having the UAV/drone carrying the first tool to a storage facility and there receiving the second tool and carrying it to the palletiser/de-palletiser 605.

Figure 11 illustrates a configuration of OTD in form of a drone 701 which has the rotors 702 positioned further out from a central point than the width of the PIM 703 which it is supposed to carry. This can be done by having arms 704 connecting the rotors 702 with a central part that can carry the PIM. This makes it possible to get a better airflow around the PIM and hence allow the OTD to carry heavier load.

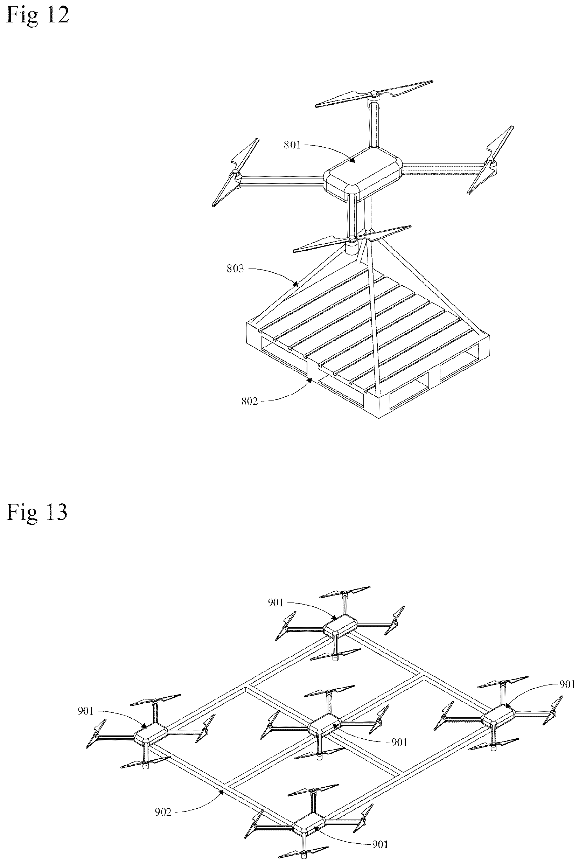

Figure 12 Illustrates an alternative way to improve the airflow from the OTD 801. There the OTD has an extension arm 803 so that the PIM is carried at a lower position. Thereby, a better airflow is secured and an increased lifting capacity of the OTD is achieved.

Figure 13 illustrates a swarm of OTDs 901 together lifting a PIM 902. The advantage of this is that several smaller and cheaper drones can be used instead of a more expensive heavier drone.

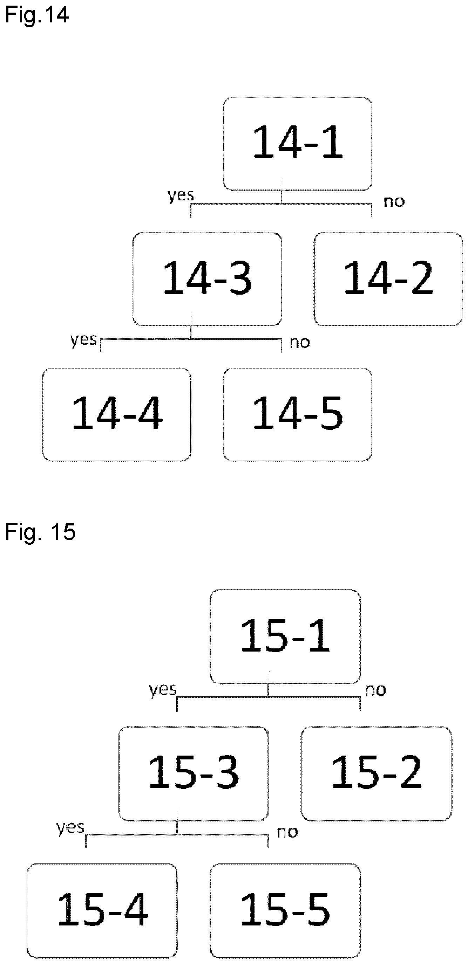

Figure 14 illustrates a decision diagram for the system.

Figure 14 illustrates a priority algorithm, where priority is given to the operation of the robot/palletiser/de-palletiser. First in step 14-1, the system evaluates whether the robot system or the palletiser/de-paletiser is in the path planned for the OTD. If the answer to this question is no, then the OTD is allowed to move under 14-2. If the answer in 14-1 is yes, then in 14-3 it is evaluated whether another path can be planned around the robot/palletiser/de-palletiser. If the answer to this question is yes, then in step 14-4 second path is planned and executed. If the answer to the question in 14-3 is no, then in step 14-5 priority is given to the robot/palletiser/de-palletiser and instructions are sent to the OTD to wait in a HZ and only carry out the flight once the robot/palletiser/de-palletiser no longer occupies the space needed for the path of the OTD. In this setup, the system prioritises the robot system/palletiser/de-palletiser operation so that the robot system/palletiser/de-palletiser is always allowed to move while the OTD is hovering or having another path in the three-dimensional space that does not conflict with the operation of the robot system/palletiser/de-palletiser.

Figure 15 illustrates a priority algorithm, where the tasks are prioritised between different tasks. First in step 15-1, it is decided whether a given OTD shall be used for a picking task. In this step, it is evaluated whether there is another OTD with sufficient battery that is closer to the picking task. If the answer is no, then in step 15-2 the OTD is assigned to the picking task and the flight path can be calculated optionally with the priorities illustrated in figure 14. If there is another OTD, which is closer and has sufficient battery, then the answer in step 15-1 is yes. Then in step 15-3, it is decided whether there is a delivery task. If the answer is yes, then the OTD is assigned to a PIM delivery task under 15-4. If the answer is no, then under step 15-5 the OTD is positioned in a waiting position. The waiting position can be in a HZ, PZ, staging zone or the like. By this algorithm, tasks between OTDs are prioritised so that the closest OTD with sufficient battery is tasked with a certain task and further priority is given to picking tasks over delivery tasks. However, the control software can also assign PIM delivery tasks to the OTD, if the system predicts that the OTS system cannot deliver enough PIM to the system. Then the priority can be given to delivery of PIM to a location missing PIM material.

## Claims

1. A method for managing pallet interlayer material comprising the steps:
- receiving pallet data relating to one or more palletising/de-palletising devices;
- moving an automated pallet interlayer overhead transport device to a pallet interlayer supply zone in which at least one pallet interlayer material is located;
- gripping a target supply pallet interlayer material with said overhead transport device; and
- transporting said pallet interlayer material to or from the pallet for palletising/de-palletising.

2. A computer-implemented method for managing pallet interlayer material comprising the steps:
- receiving pallet data relating to a palletising/de-palletising device;
- determining pallet interlayer material requirements; and
- providing instructions to an overhead transport device.

3. The method of either claim 1 or claim 2, further comprising the step of assigning an area for palletising and/or de-palletising.

4. The method of either claim 2 or claim 3, further comprising the step of identifying or designating the pallet interlayer supply zone or a staging zone comprising at least one pallet interlayer material.

5. The method of any of the preceding claims, wherein the pallet interlayer material requirements are determined according to payload characteristics, interlayer material type, condition and/or availability, overhead transport device type, condition, speed of execution and/or availability.

6. The method of any of the preceding claims, further comprising the step of determining a route of travel for the overhead transport device.

7. The method of claim 6 further comprising the step of providing route instructions to an overhead transport device, wherein determining overhead transport device route determines an optimal route for collision avoidance; and wherein receiving pallet data comprises receiving positional and/or route data relating to the palletising/de-palletising device or the overhead transport device.

8. The method of claim 7, wherein determining the overhead transport device route comprises checking the palletising/de-palletising device positional data and determining a second route for said overhead transport device such that collision of the overhead transport device with the palletising/de-palletising device is avoided.

9. The method of any of the preceding claims further comprising the step of an overhead transport device moving to a zone, where switching of the type of gripping means may be performed and further enabling said switching.

10. The method of any of the preceding claims, wherein gripping means are adjusted or modified according to pallet interlayer requirements.

11. The method of any one of the preceding claims, wherein data relating to the palletising/de-palletising device, to an overhead transport system, or to warehouse configuration is transferred from the overhead transport device or gripping means or from a sensor to a data processing apparatus.

12. The method of any of the preceding claims, wherein pallet interlayer material is interposed between layers of goods, wherein a control system receives said palletising/de-palletising device related data and determines at what time a palletising/de-palletising device is to drop at least one pallet interlayer material on the pallet present in the palletising/de-palletising zone, thereby resulting in pallet interlayer material being arranged within at least two layers of goods or layered on top or beneath a layer of goods being stacked or to be stacked.

13. A data processing apparatus comprising means for carrying out the steps:
- receiving pallet data relating to a palletising/de-palletising device; and
- providing instructions to an overhead transport device.

14. The data processing apparatus of claim 13, further comprising means for carrying out the steps of any one of claims 1 to 12.

15. Gripping means for gripping at least one pallet interlayer material.

16. The gripping means of claim 15, wherein said gripping means are adapted to be actuable by comprising a suction, push-fit, screw or snap-fit mechanism for locking to an overhead transport device.

17. A system comprising:
- an overhead transport system comprising an overhead transport device comprising gripping means according to any one of claims 15 or 16; and
- the data processing apparatus of any one of claims 13 to 14 communicatively connected to said overhead transport device.

18. The system of claim 17, wherein the overhead transport device is of a type selected from the group comprising drones, unmanned aerial vehicles, multi-copters, multi-cable winch systems and mini-cranes.

19. The system of claim 17 or 18 comprising at least two types of overhead transport devices.

20. The system of any one of claims 17-19, wherein the gripping means of the overhead transport device are configured for gripping at least one pallet interlayer material, and wherein said gripping means comprise switchable and/or adjustable gripping means.

21. The system of claim 17, wherein the system further comprises a gripping means exchange station.

22. A computer program comprising instructions which cause the computer to carry out the method of any one of claims 1 to 12, when the program is executed by a computer.

23. A computer-readable medium having stored thereon the computer program of claim 22.

24. A method of changing a tool of a palletising/de-palletising device such as a robot, a gantry, a bridge crane or the like, said method comprising the steps of
- determining that a tool change is needed
- determining what replacement tool is needed
- moving an overhead transport device to the palletising/de-palletising device
- releasing the tool to the overhead transport device
- transporting the replacement tool to the palletising/de-palletising device with an overhead transport device
- transferring the replacement tool to the palletising/de-palletising device

25. A method according to claim 24, where the replacement tool is a tool for an alternative picking task

26. A method according to claim 24 or 25, where at least two OTDs are used for the changing of the tool.
